# EUROPÄISCHE PATENTSCHRIFT

(11) **EP 3 704 673 B1**
(45) Veröffentlichungstag und Bekanntmachung des Hinweises auf die Patenterteilung: **14.09.2022**
(21) Anmeldenummer: 18796431.7
(22) Anmeldetag: 31.10.2018
(51) Int. Cl.: G07C 9/00

(54) **ELEKTRONISCHES HANDGERÄT, INSBESONDERE FUNKSCHLÜSSEL, MIT EINER DICHTHAUBE**
ELECTRONIC HANDHELD DEVICE, IN PARTICULAR RADIO KEY, WITH A SEALING HOOD
APPAREIL À MAIN ÉLECTRONIQUE, EN PARTICULIER RADIOCOMMANDE, POURVU D'UN CAPOT ÉTANCHE

(30) Priorität: 15.01.2018 DE 102018100715
(43) Veröffentlichungstag der Anmeldung: 09.09.2020
(73) Patentinhaber: Huf Hülsbeck & Fürst GmbH & Co. KG, 42551 Velbert (DE)
(72) Erfinder: WIECZOREK, Roland, 42549 Velbert (DE); SCHRÖTER, Rob, 40589 Düsseldorf (DE)
(74) Vertreter: Zenz Patentanwälte Partnerschaft mbB
(86) Internationale Anmeldenummer: PCT/EP2018/079840
(87) Internationale Veröffentlichungsnummer: WO 2019/137648

(56) Entgegenhaltungen:
- EP-A2- 2 405 407
- DE-A1-102006 037 790
- JP-A- H11 189 268
- Anonymous: "Heißverstemmen", , 21. März 2017 (2017-03-21), XP055545525, DOI: 10.1002/latj.200890055/abstract) Gefunden im Internet: URL:https://de.wikipedia.org/w/index.php?t itle=Hei%C3%9Fverstemmen&oldid=163794033 [gefunden am 2019-01-22]

## Beschreibung

Die Erfindung betrifft ein elektronisches Handgerät, insbesondere ein portables Handgerät, das zur Funkkommunikation eingerichtet ist.

Elektronische Handgeräte sind aus der Praxis bekannt.

Ein Beispiel für einen Bereich, in dem elektronische Handgeräte in hoher Zahl verwendet werden, sind elektronische Schließsysteme von Fahrzeugen. Die Funktionalität moderner elektronischer Schließsysteme von Fahrzeugen beruht auf einer Funkkommunikation zwischen einem kraftfahrzeugseitigen Steuergerät und einem als Funkschlüssel ausgebildeten elektronischen Handgerät. Im Rahmen der Funkkommunikation wird, in der Regel mittels kryptographischer Methoden, eine Zugangsberechtigung des Besitzers des Funkschlüssels geprüft. Das Spektrum der konkreten Ausführungsformen von Funkschlüsseln ist breit und umfasst beispielsweise Funkschlüssel für einen Gebrauch mit Schließsystemen, die oft als Keyless-Schließsysteme bezeichnet werden.

Für die Funktionalität der Handgeräte, beispielsweise der Funkschlüssel, ist in diesen in der Regel eine Batterie zur elektrischen Spannungsversorgung der die Funktionalität bereitstellenden elektronischen Bauelemente eingesetzt.

Aufgrund der regelmäßigen und häufig beiläufig empfundenen Benutzung der elektronischen Handgeräte durch einen Bediener werden elektronische Handgeräte, wie beispielsweise Funkschlüssel, häufig in am Körper getragenen Kleidungsstücken aufbewahrt. Die Aufbewahrung eines Funkschlüssels in einer Hosentasche ist ein Beispiel dafür. Bei einem in einem Kleidungsstück aufbewahrten elektronischen Handgerät besteht die Gefahr, dieses versehentlich mit der Kleidung einer Kleiderwäsche zuzuführen.

Vor dem Hintergrund des vorstehend erläuterten Szenarios besteht der Wunsch, elektronische Handgeräte bereitzustellen, die ein hohes Maß an Wasserdichtheit aufweisen. Die nachfolgend beschriebene Erfindung ist ausgehend von dieser Aufgabenstellung entwickelt worden.

Die Aufgabe wird gelöst mit einem elektronischen Handgerät mit den Merkmalen des Anspruchs 1.

Es ist ein elektronisches Handgerät vorgesehen, welches ein Gehäuse mit wenigstens einem Gehäuseelement aufweist. Das elektronische Handgerät weist außerdem eine Elektronikanordnung, beispielsweise eine Platine und auf der Platine angeordnete elektronische Bauteile, und einen Batterieraum für die Aufnahme einer Flachbatterie zur elektrischen Spannungsversorgung der Elektronikanordnung beziehungsweise der auf der Elektronikanordnung angeordneten elektronischen Bauelemente auf. Der Batterieraum ist mit dem Gehäuseelement verbunden oder zumindest teilweise, bevorzugt vollständig, als einstückiger Bestandteil des Gehäuseelements ausgebildet. Der Batterieraum kann beispielsweise als in dem Gehäuseelement eingeformte Wanne ausgebildet sein.

Das Gehäuseelement kann beispielsweise aus einem Thermoplast hergestellt sein.

Das Gehäuseelement weist eine Zugangsfläche auf, von welcher aus die Batterie zugänglich ist. Für eine Entnahme einer in dem Batterieraum vorhandenen Batterie oder für ein Einsetzen einer Batterie in den Batterieraum hinein weist der Batterieraum eine Einsatzöffnung auf, die bevorzugt bündig mit der Zugangsfläche abschließt.

Beispielsweise kann die Zugangsfläche als plane oder zumindest teilweise plane Fläche vorgesehen sein, die den als Wanne ausgebildeten Batterieraum begrenzt, so dass die Öffnung der Wanne die Einsatzöffnung des Batterieraums ist. Bevorzugt ist die Zugangsfläche bündig mit oder parallel mit einer Stirnfläche einer in dem Batterieraum eingesetzten Flachbatterie orientiert. Eine Flachbatterie kann durch die Einsatzöffnung in den Batterieraum eingesetzt oder aus dem Batterieraum heraus entnommen werden.

An der Zugangsfläche des Gehäuseelements ist eine umlaufende Dichtungsnut ausgebildet. Diese Dichtungsnut umläuft die Einsatzöffnung einmal vollständig. Die Dichtungsnut folgt also einem geschlossenen Verlauf und kann beispielsweise ringförmig ausgebildet sein. Bevorzugt weist die Dichtungsnut zwei seitliche Begrenzungsflächen auf, die senkrecht zu der Zugangsfläche orientiert sind.

An dem Gehäuseelement ist eine Dichthaube angeordnet. Die Dichthaube verschließt die Einsatzöffnung, um die Einsatzöffnung flüssigkeitsdicht abzuschließen. Die Eigenschaft der Flüssigkeitsdichtheit ist dahingehend zu verstehen, dass ein Eintritt von aus Luftfeuchte stammendem Wasser in die Einsatzöffnung hinein, in die Funktionalität des Handgeräts beeinträchtigender Weise bei normalem Gebrauch während einer typischen Nutzungsdauer des Handgeräts ausgeschlossen werden kann. Je nach Auslegung des Handgeräts durch den Fachmann kann dieses beispielsweise auch kurzzeitigen stärkeren Flüssigkeitsbeanspruchungen ohne negative Auswirkungen auf die Funktionalität widerstehen.

Die Einsatzöffnung ist öffenbar und wiederverschließbar verschlossen. Das bedeutet insbesondere und zumindest, dass die Dichthaube für einen Batteriewechsel zerstörungsfrei von der Einsatzöffnung entfernt werden kann und nach dem Batteriewechsel wieder in den ursprünglichen Verschlusszustand gebracht werden kann. Insbesondere ist die Dichthaube nicht stoffschlüssig mit dem Gehäuseelement verbunden.

Zur zuverlässigen Anordnung der Dichthaube an dem Gehäuseelement und zur reversiblen Abdichtung der Einsatzöffnung ist die Dichthaube mit einer elastischen Dichterhebung versehen.

Die elastische Dichterhebung ist an einer Dichtungsfläche der Dichthaube angeordnet. Die Dichtungsfläche ist diejenige Fläche der Dichthaube, die der Zugangsfläche zugewandt ist, bevorzugt zumindest abschnittsweise auf der Zugangsfläche aufliegt. Die Dichterhebung ist komplementär zu der Dichtungsnut ausgebildet. Unter der komplementären Ausbildung der Dichterhebung zu der Dichtungsnut ist zu verstehen, dass Form und Positionierung der Dichterhebung derart gewählt sind, dass die Dichterhebung sich bei verschlossener Einsatzöffnung innerhalb der Dichtungsnut befindet. Bevorzugt weist die Dichterhebung einen geschlossenen Verlauf auf und umläuft die Einsatzöffnung einmal vollständig.

Die Dichterhebung ist derart ausgebildet, dass die Dichterhebung in einer Radialrichtung der Dichtungsnut ein Übermaß gegenüber der Dichtungsnut aufweist. Eine Radialrichtung ist eine Richtung, die senkrecht zu einer Flächennormale der Einsatzöffnung orientiert ist, in einem bevorzugten Spezialfall senkrecht zu einer Ebenennormale einer Stirnfläche der Flachbatterie orientiert ist.

Der Begriff des Übermaßes bezieht sich auf den nichtkomprimierten Zustand der Dichterhebung. Die Dichterhebung weist somit außerhalb der Dichtungsnut ein Übermaß auf, das innerhalb der Dichtungsnut durch die Begrenzungen der Dichtungsnut in die Begrenzungen der Dichtungsnut geformt wird.

Bei einer kreiszylindrischen Flachbatterie ist eine Radialrichtung eine Richtung, die zur Rotationsachse der kreiszylindrischen Flachbatterie senkrecht orientiert ist.

Bevorzugt ist die Flachbatterie kreiszylindrisch und von einer Dichtungsnut umlaufen, deren Grenzkanten auf der Zugangsfläche jeweils einem Kreisverlauf folgen. Besonders bevorzugt sind die seitlichen Begrenzungsflächen der Dichtungsnut senkrecht zu der Zugangsfläche und koaxial mit der Rotationsachse der in dem Batterieraum eingelegten Flachbatterie umfasst.

Dadurch, dass die Dichterhebung in der Radialrichtung der Dichtungsnut erfindungsgemäß das Übermaß gegenüber der Dichtungsnut aufweist, ist die Dichterhebung innerhalb der Dichtungsnut durch die Dichtungsnut in der Radialrichtung elastisch verformt. Infolge der elastischen Verformung der Dichtungsnut werden Rückstellkräfte herbeigeführt. Die radial wirkenden Rückstellkräfte bewirken eine Dichtwirkung, so dass eine gute Abdichtung des Batterieraums vor dem Äußeren des Batterieraums, beispielsweise vor Flüssigkeiten, herbeigeführt wird.

Der Begriff der elastisch verformbaren Dichterhebung ist dahingehend zu verstehen, dass die Dichterhebung in Abstimmung zu der Dichtungsnut ausgebildet ist, dass die Dichterhebung von der Dichtungsnut verformt wird und im verformten Zustand infolge der Elastizität zur Bereitstellung der Dichtwirkung genügende Rückstellkräfte aufbringt. Eine entsprechende Materialauswahl und Festlegung einer konkreten Geometrie ist von dem Fachmann in Abhängigkeit von den ihm auferlegten Vorgaben, beispielsweise hinsichtlich angestrebter Dichtheit, zu treffen und für diesen, beispielsweise auf empirischem Wege, problemlos möglich.

Beispielsweise kann eine radiale Erstreckung des Übermaßes der Dichterhebung in der radialen Richtung zwischen 5 und 50 Prozent, bevorzugt zwischen 10 und 20 Prozent, der radialen Erstreckung der Dichtungsnut betragen.

In einer bevorzugten Ausführungsform weist die Dichterhebung in ihrem gesamten Umlauf der Einsatzöffnung ein Übermaß gegenüber der Dichtungsnut auf, sodass die durch elastische Verformung herbeigeführte Dichtwirkung den Batterieraum vollständig umlaufend bereitgestellt wird.

Die gewünschte Abdichtung des Batterieraums gegen Flüssigkeiten wird also erreicht, indem die Einsatzöffnung, durch welche die Batterie eingesetzt oder entnommen werden kann, vollständig verschlossen wird. Die Verbindung der zum Verschließen vorgesehenen Dichthaube mit dem Gehäuseelement, welches den Batterieraum aufweist, wird durch den Kraftschluss zwischen der Dichterhebung der Dichthaube mit der Dichtungsnut des Gehäuseelements herbeigeführt oder zumindest unterstützt. Der Kraftschluss wird durch die in Radialrichtung erfolgende elastische Verformung der Dichterhebung herbeigeführt oder zumindest verstärkt. Die Dichterhebung erzeugt durch die elastische Verformung Rückstellkräfte, welche auf Innenwandungen der Dichtungsnut eine radiale Kraft ausüben und dadurch die gewünschte Dichtwirkung herbeiführen oder zumindest verbessern.

Es ist nicht ausgeschlossen, dass zusätzlich zu der radial elastischen Verformung und dadurch herbeigeführten Dichtwirkung auch axiale Verformungen und/oder in axialer Richtung vorgesehene Verbindungen, beispielsweise durch entsprechende Hinterschnitte der Dichtungsnut, vorgesehen sind. Derartige Überlegungen können im Rahmen von speziellen Ausführungsformen der Erfindung umgesetzt sein.

Die elastische Ausgestaltung der Dichterhebung kann Ausgestaltungen umfassen, in denen die Dichterhebung nur abschnittsweise elastisch ist. Wesentlich ist, dass die Dichterhebung bei einem Einbringen in die Dichtungsnut derart elastischen Verformungen unterliegt, dass in Radialrichtung auf die Seitenwände der Dichtungsnut wirkende Rückstellkräfte herbeigeführt werden. Bevorzugt besteht die Dichterhebung jedoch in ihrem gesamten Volumen aus elastischem Material. Besonders bevorzugt ist eine einstückige Ausbildung der Dichthaube einschließlich der Dichterhebung aus demselben elastischen Material.

Mit dem Übermaß der Dichterhebung in einer radialen Richtung wird eine vergleichsweise elegante und gut handhabbare Anordnung der Dichthaube an dem Gehäuseelement bewirkt. Die Fixierung und die Dichtung erfolgen mit dem Dichtelement, wodurch keine gesonderten weiteren Elemente oder Ausformungen, beispielsweise Hinterschnitte in der Nut oder ähnliches, zwingend erforderlich sind. Es sind also nur zwei Ausformungen, nämlich die Dichterhebung und die Dichtungsnut, wesentlich für die Herbeiführung der bezweckten Funktionalität, wobei mit dem Dichtelement eines der beiden elastisch ausgebildet ist. Aus diesen Rahmenbedingungen folgt, dass die einzuhaltenden Toleranzen sehr großzügig vorgesehen werden können, woraus sich eine leichte und entsprechend kostengünstige Herstellung der Dichthaube und des Gehäuseelements ergibt. Eine besonders gute Ausnutzung der Toleranzkette wird erreicht, wenn die Dichthaube als einstückig urgeformtes Bauteil bereitgestellt wird, wie es bevorzugt ist.

Bei Abnehmen der Dichthaube von dem Gehäuseelement und somit Entfernen der Dichterhebung aus der Dichtungsnut ist wünschenswert, dass ein unbeabsichtigter Verlust der Dichthaube weitgehend zuverlässig vermieden werden kann. Aus diesem Grund weist das Gehäuseelement ein Rückhalteelement auf, das sowohl der Zugangsfläche als auch der Einsatzöffnung benachbart angeordnet ist. Das Rückhalteelement weist einen Pilzkopf und einen gegenüber dem Pilzkopf verjüngten Säulenabschnitt auf. Der Pilzkopf ist ein von der Zugangsfläche beabstandeter Abschnitt des Rückhalteelements, der in radialer Richtung größere Erstreckungen aufweist als der unmittelbar an der Zugangsfläche angeordnete Säulenabschnitt.

Durch den Pilzkopf wird in Zusammenwirkung mit dem Säulenabschnitt ein Hinterschnitt bereitgestellt. Der Hinterschnitt dient der axialen Positionierung der Dichthaube. Die Dichthaube ist mit einer Befestigungszunge an dem Rückhalteelement angeordnet. Die Befestigungszunge ist auf Positionierung und Ausformung des Rückhalteelements angepasst ausgebildet und aus einem elastischen Material gefertigt.

Die Befestigungszunge weist ein Befestigungsloch auf. Das Befestigungsloch umfasst den Säulenabschnitt zur Befestigung der Dichthaube an dem Handgerät. Das Befestigungsloch liegt derart eng, bevorzugt bündig, an dem verjüngten Säulenabschnitt an, dass der bereitgestellte Hinterschnitt eine Beweglichkeit der Dichthaube in einer axialen Richtung begrenzt. Bevorzugt sind eine axiale Erstreckung des verjüngten Säulenabschnitts und eine Dicke der Befestigungszunge im an dem Befestigungsloch anliegenden Bereich der Befestigungszunge gleich, das heißt mit einer höchstens geringfügigen Dickenabweichung im Bereich von beispielsweise höchstens 5 Prozent der axialen Erstreckung des verjüngten Säulenabschnitts.

Dadurch, dass die Befestigungszunge elastisch ausgebildet ist, wird bei Erstmontage des Handgeräts die Dichthaube mittels elastischer Verformung der Befestigungszunge im Bereich des Befestigungslochs und nachfolgendem Überziehen über den Pilzkopf an dem Rückhalteelement befestigt. Selbstverständlich sind die Dimensionierungen des Pilzkopfes und die Materialauswahl der Dichthaube, zumindest im Bereich der Befestigungszunge, vom Fachmann entsprechend auszuwählen.

Dadurch, dass die Dichthaube mit der Befestigungszunge an dem Gehäuseelement fixiert ist, wird die Einführung der Dichterhebung in die Dichtungsnut, beispielsweise nach einem Batteriewechsel, deutlich erleichtert.

In einer speziellen Ausgestaltung des Handgeräts kann das Rückhalteelement als heißverstemmter Dom ausgebildet sein. Diese Ausführungsform bringt bei der Herstellung des Handgeräts den Vorteil mit sich, dass der Dom und das Befestigungsloch der Befestigungszunge aufeinander angepasst sein können, beispielsweise denselben Radius aufweisen können, und nach dem Einführen des Doms in das Befestigungsloch und dem Anordnen der Dichthaube mittels des Heißverstemmens die Dichthaube passgenau an dem Handgerät befestigt wird.

Gemäß einer vorteilhaften Weiterbildung der Erfindung ist an dem Gehäuseelement ein zylindrisches Führungsglied angeordnet, das in der Nähe der Einsatzöffnung und des Rückhalteelements positioniert ist. In dieser Ausführung weist die Befestigungszunge eine komplementär zum Führungsglied ausgeformte Führungsöffnung auf. Die Führungsöffnung und das Führungsglied sind derart zueinander positioniert und geformt, dass das Führungsglied von der Führungsöffnung umfasst wird und somit das Führungsglied zur Positionierung der Dichthaube gegen ein Verdrehen der Dichthaube in einer Dichthaubenebene beiträgt. Dadurch, dass mit dem Führungsglied und dem Rückhalteelement zwei Ankopplungspunkte der Dichthaube an dem Handgerät vorliegen, wird eine für den Bediener weiter erleichterte Handhabung der Dichthaube im Rahmen eines Batteriewechsels erreicht.

Um das Auftreten von mechanischen Spannungen innerhalb der Dichthaube zu unterbinden oder zumindest zu verringern, weist die Dichthaube gemäß einer vorteilhaften Ausführungsform einen Faltenbalg auf, der zwischen der elastischen Befestigungszunge und der Dichterhebung angeordnet ist. Der Faltenbalg dient als Materialreserve der Befestigungszunge, um außerhalb des Faltenbalgs aufgrund elastischer Verformungen entstehende Spannungen zumindest teilweise aufzunehmen und dadurch einen Verschleiß der Dichthaube oder negative Beeinträchtigungen der Dichtheit zu reduzieren.

Das erfindungsgemäße Handgerät sieht ein Seitenzierelement des Gehäuseelements vor, welches mit dem Gehäuseelement verbunden ist. Gemäß dieser erfindungsgemäßen Ausgestaltung ist die Dichthaube zwischen dem Seitenzierelement und einer Seitenfläche des Gehäuseelements angeordnet. Zur Anordnung der Dichthaube zwischen Seitenzierelement und Gehäuseelement weist die Dichthaube eine Klemmlasche auf, die eine Rückhalteöffnung umfasst. Die Klemmlasche liegt an einer Seitenfläche des Gehäuseelements an und ist mit ihrer Rückhalteöffnung um einen Rückhaltevorsprung angeordnet. Der Rückhaltevorsprung ist bevorzugt einstückiger Bestandteil des Gehäuseelements.

Die Klemmlasche liegt mit einer ersten Fläche an dem Gehäuseelement und mit einer zweiten Fläche an dem Seitenzierelement an. Eine zwischen dem Gehäuseelement und Seitenzierelement angeordnete Klemmlasche, die in der Regel während der Erstmontage des Handgeräts entsprechend zu positionieren ist, führt zum einen zu einer optisch eleganten Fixierung und zum anderen zu einem sicheren und festsitzenden Halt der Dichthaube an dem Handgerät.

Besonders bevorzugt ist, wenn eine radiale Erstreckung der Dichterhebung entlang des gesamten Umfangs der Dichterhebung ein Übermaß gegenüber einem Radialabstand der Begrenzungsflächen aufweist, welche die Dichtungsnut begrenzen. Da sich das Übermaß auf den nicht-komprimierten Zustand der Dichterhebung bezieht, bedeutet dies mit anderen Worten, dass die Dichterhebung bevorzugt entlang des gesamten Umfangs der Dichterhebung durch die seitlichen Begrenzungsflächen der Dichtungsnut radial komprimiert ist. Dadurch ergibt sich eine radiale Rückstellkraft entlang des gesamten Umfangs der Dichterhebung, woraus eine besonders gute Dichtwirkung resultiert.

Bevorzugt ist, wenn die Dichtungsnut entlang ihrer gesamten axialen Erstreckung koaxiale Begrenzungsflächen aufweist, so dass die Begrenzungsflächen der Dichtungsnut in einer radialen Richtung für alle auf einer Symmetrie-Drehachse der kreiszylindrischen Flachbatterie senkrechten Geraden senkrecht orientiert sind. Eine derartige Ausgestaltung ist besonders elegant und weist aufgrund ihrer hohen Symmetrie eine gute Kraftverteilung in der radial komprimierten Dichterhebung auf.

Bevorzugt weisen die Dichtungsnut und die Dichterhebung also jeweils einen Kreisverlauf auf.

Die Dichterhebung weist bevorzugt ein Elastomer auf, wobei elastomere Silikone besonders geeignet und dadurch besonders bevorzugt sind. Eine besonders elegante Ausgestaltung der Dichthaube sieht vor, dass die Dichterhebung ausschließlich aus dem Elastomer besteht, wobei besonders bevorzugt die gesamte Dichthaube als einstückiges elastisches Element bereitgestellt wird, bevorzugt aus einem elastomeren Silikon urgeformt.

Wie eingangs bereits erwähnt, liegt ein bevorzugter Verwendungszweck für die beschriebenen Handgeräte in als Funkschlüssel eines Fahrzeugs ausgebildeten Handgeräten. Der Begriff des Funkschlüssels ist weit zu verstehen, insbesondere sollen auch ID-Geber für Keyless-Entry-Schließanlagen umfasst sein, unabhängig davon, ob der ID-Geber auch mechanische Öffnungsmittel, insbesondere einen Schlüsselhalm, umfasst.

Weitere Einzelheiten, Merkmale und Vorteile des Gegenstands der Erfindung ergeben sich aus der nachfolgenden Beschreibung in Zusammenhang mit den Zeichnungen. In den Zeichnungen werden Ausführungsbeispiele der Erfindung dargestellt.

Es versteht sich, dass die vorstehend genannten wie auch die nachfolgend erläuterten Merkmale nicht nur in der jeweils angegebenen Kombination, sondern auch in anderen Kombinationen oder in Alleinstellung verwendbar sind.

Es zeigen:
Fig. 1a: Ausgestaltung eines als Funkschlüssel für ein Fahrzeug ausgebildeten elektronischen Handgeräts in einer perspektivischen Schrägansicht;
Fig. 1b: Funkschlüssel der Fig. 1a mit entfernter Verschlusskappe und ohne Dichthaube;
Fig. 2: Darstellung der Fig. 1b mit zugefügter Dichthaube;
Fig. 3a: Schnittdarstellung des Funkschlüssels der Fig. 2 gemäß Schnittebene A-A;
Fig. 3b: Schnitt entsprechend Fig. 3a, jedoch mit angeordneter Dichthaube;
Fig. 4: Ausschnitt aus Fig. 3b;
Fig. 5: Dichthaube aus dem Funkschlüssel der Fig. 2 in einer perspektivischen Einzeldarstellung;
Fig. 6: ein anderes Ausführungsbeispiel eines Funkschlüssels in einer Darstellung ohne Verschlusskappe;
Fig. 7: Schnittdarstellung des Funkschlüssels der Fig. 6 gemäß Schnittebene B-B;
Fig. 8: ein Ausführungsbeispiel eines Funkschlüssels als Beispiel eines erfindungsgemäßen Handgeräts in einer Darstellung ohne Verschlusskappe;
Fig. 9: Schnittdarstellung des Funkschlüssels der Fig. 8 in einer Darstellung gemäß Schnittebene C-C;
Fig. 10: perspektivische Seitendarstellung des Funkschlüssels der Fig. 8 mit abgenommenem Seitenzierelement;
Fig. 11: Dichthaube des Funkschlüssels der Fig. 8 in einer perspektivischen Seitendarstellung;
Fig. 12: perspektivische Detaildarstellung der Dichthaube des Funkschlüssels der Fig. 8 in an dem Gehäuseelement angeordneter Position.

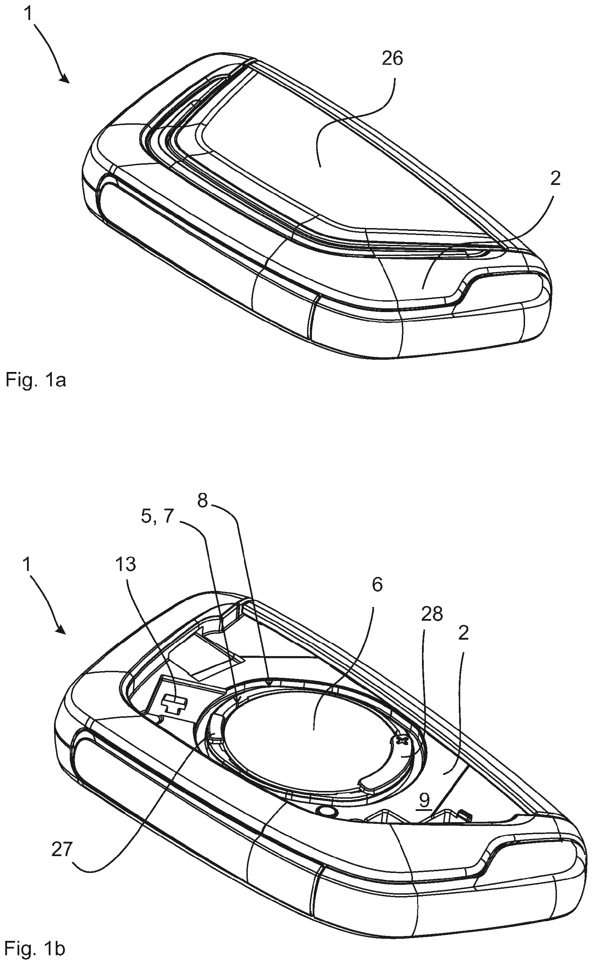

In Fig. 1a ist ein als Funkschlüssel eines Fahrzeugs ausgebildetes elektronisches Handgerät 1 dargestellt. Das Handgerät 1 weist unter anderem ein Gehäuseelement 2 sowie eine wegklappbare Verschlusskappe 26 auf.

Nach Wegklappen der Verschlusskappe 26 wird der Innenraum des Funkschlüssels 1 zugänglich, insbesondere für einen Batteriewechsel. Der Innenraum des Funkschlüssels 1 in der Ausgestaltung der Fig. 1a ist in Fig. 1b dargestellt, wobei die Verschlusskappe nicht dargestellt ist. Es ist zu erkennen, dass der Funkschlüssel 1 ein Gehäuseelement 2 aufweist. Das Gehäuseelement 2 dient in der gezeigten Ausgestaltung als tragendes Gerüst des Funkschlüssels 1 sowie als physische Trennung zwischen der Elektronikanordnung, die in der gezeigten Ausgestaltung unterhalb des Gehäuseelements angeordnet und deswegen von diesem verdeckt ist. Das Gehäuseelement 2 weist eine Zugangsfläche 9 auf, von der ausgehend ein Batterieraum 5 in das Funkschlüsselinnere hinein ausgeformt ist. Der Batterieraum 5 ist in der gezeigten Ausgestaltung als Wanne ausgebildet, welche mit einer mit der Zugangsfläche 9 bündigen Einsatzöffnung 7 abschließt.

In dem Batterieraum 5 ist eine Flachbatterie 6 angeordnet und mittels Rückhalteschnappern 27, 28 an seiner Position gehalten. Durch die Einsatzöffnung 7 ist die Flachbatterie 6, beispielsweise für einen Batteriewechsel, entnehmbar. Von der Zugangsfläche 9 ausgehend ist in das Gehäuseelement 2 hinein eine Dichtungsnut 8 ausgeformt, welche die Einsatzöffnung 7 und damit auch die Flachbatterie 6 einmal konzentrisch und einem Kreisverlauf folgend umläuft. Alternativ zu dem bevorzugten konzentrischen Kreisverlauf sind auch andere Verläufe der Dichtungsnut 8 denkbar.

An dem Gehäuseelement ist ein Rückhalteelement 13 angeordnet, welches als Rückhaltepilz ausgebildet ist, nämlich einen Pilzkopf aufweist, der auf einem gegenüber dem Pilzkopf verjüngten Säulenabschnitt befestigt ist.

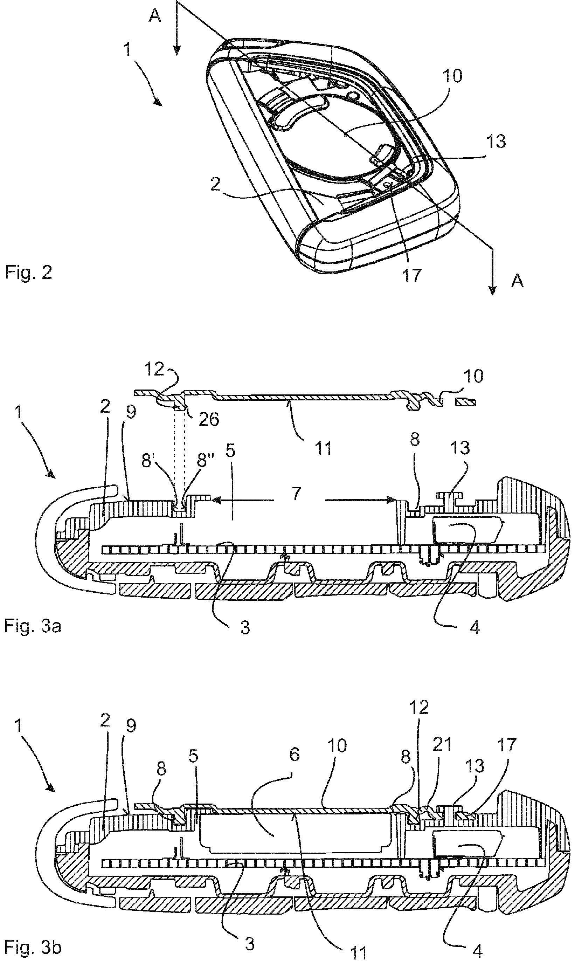

In Fig. 2 ist der Funkschlüssel 1 der Fig. 1b dargestellt, jedoch in einer um etwa 180 Grad gedrehten perspektivischen Orientierung. Die Darstellung der Fig. 2 zeigt eine die Einsatzöffnung 7 verschließende Dichthaube 10. Die Dichthaube 10 verdeckt unter anderem die Flachbatterie 6 und dichtet diese von der äußeren Umgebung flüssigkeitsdicht ab. Zur Befestigung der Dichthaube 10 an dem als Gehäusehalbschale ausgebildeten Gehäuseelement 2 ist eine elastische Befestigungszunge 17 der Dichthaube 10 mit einem Befestigungsloch der Befestigungszunge 17 um den Säulenabschnitt des Rückhalteelements 13 positioniert. Ein Querschnitt des in der Befestigungszunge 17 angeordneten Befestigungslochs ist derart auf den Säulenabschnitt 15 und den Pilzkopf 14 angepasst ausgebildet, dass eine unbeabsichtigte Trennung der an dem Rückhalteelement 13 angeordneten Befestigungszunge 17 von dem Gehäuseelement 2 weitgehend auszuschließen ist.

Dem Querschnitt der Fig. 3a ist zu entnehmen, wie die Abdichtung der Einsatzöffnung 7 mittels der Dichthaube 10 vorgenommen wird. In der gezeigten Ausgestaltung ist die Dichthaube 10 als einstückiges elastisches Element ausgebildet, das aus einem elastomeren Silikon, auch als Silikon-Elastomer bezeichnet, besteht. Die Dichthaube 10 weist an derjenigen ihrer beiden Flächen, welche dem Batterieraum 5 zugewandt ist und die als Dichtungsfläche 11 bezeichnet wird, eine Dichterhebung 12 auf.

Die Dichterhebung 12 ist komplementär zu der Dichtungsnut 8 ausgebildet, was dahingehend zu verstehen ist, dass Positionierung und Ausformung von Dichterhebung 12 und Dichtungsnut 8 derart ausgeführt sind, dass die Dichterhebung 12 in die Dichtungsnut 8 einführbar ist. In einer Radialrichtung der Dichtungsnut 8, die in der gezeigten Ausgestaltung senkrecht zur Rotationsachse der Dichtungsnut 8 und in der speziellen Ausgestaltung auch senkrecht zu einer Ebenennormale der Dichtungsfläche orientiert ist, weist die Dichterhebung 12 ein Übermaß gegenüber der Dichtungsnut 8 auf. Das bedeutet, dass ein Abstand zwischen der äußeren Begrenzungsfläche 8' der Dichtungsnut 8 und der inneren Begrenzungsfläche 8" der Dichtungsnut 8 geringer ist als eine radiale Erstreckung der Dichterhebung 12 an einem zur Einführung zwischen den Begrenzungsflächen 8', 8" vorgesehenen Abschnitt im nicht eingeführten Zustand der Dichterhebung 12. In der gezeigten Ausgestaltung wird die größere axiale Erstreckung der Dichterhebung 12 durch den Dichtungswulst 26 bereitgestellt, der in der gezeigten und in allen bevorzugten Ausgestaltungen dem gesamten Umlauf der Dichtungsnut 8 folgend verläuft.

Bei Anordnung der Dichterhebung 12 in der Dichtungsnut 8 wird die Dichterhebung 12 in der Radialrichtung elastisch verformt, wie in Fig. 3b dargestellt. Dadurch, dass das Übermaß in der gezeigten Ausgestaltung entlang des gesamten Umfangs der Dichterhebung 12 vorliegt, erfolgt die elastische Verformung in der Radialrichtung ebenfalls entlang des gesamten Umfangsverlaufs der Dichterhebung 12. Durch die in Radialrichtung vorliegende elastische Verformung der Dichterhebung 12 werden Rückstellkräfte bereitgestellt, welche eine hohe Abdichtung des Batterieraums 5 vor einem Eintritt von im Außenraum vorliegenden Flüssigkeiten bereitstellt. Zur Befestigung der Dichthaube 10 an dem Gehäuseelement 2 wurde die Befestigungszunge 17 mit einem an der Befestigungszunge 17 eingebrachten Befestigungsloch über den Pilzkopf des Rückhalteelements 13 gestülpt, so dass eine Positionierung der Klemmlasche in axialer Richtung und eine Anordnung der Dichthaube 10 an dem Handgerät 1 vor versehentlichem Lösen geschützt ist. Um bei Befestigung der Dichthaube 10 an dem Rückhalteelement 13 ein Einbringen von mechanischen Spannungen in die Dichthaube 10 mit potenziell nachteiligen Eigenschaften unter anderem für die Dichtwirkung zu vermeiden, ist zwischen der Befestigungszunge 17 und der Dichterhebung 12 ein Faltenbalg 21 angeordnet, der infolge einer in das elastische Material eingeformten Wölbung als Materialpuffer dient. In der gezeigten Darstellung werden die Dichtwirkung sowie das optische Erscheinungsbild der an dem Funkschlüssel 1 angeordneten Dichthaube 10 weiter verbessert, indem die Dichtungsfläche 11 bereichsweise auf der Zugangsfläche 9 aufliegend angeordnet ist. Den Schnitten der Figs. 3a und 3b ist außerdem die Positionierung einer Platine 3 und eines auf der Platine 3 angeordneten Mikroprozessors 4 zu entnehmen, die gemeinsam Bestandteil der Elektronikanordnung 3, 4 sind.

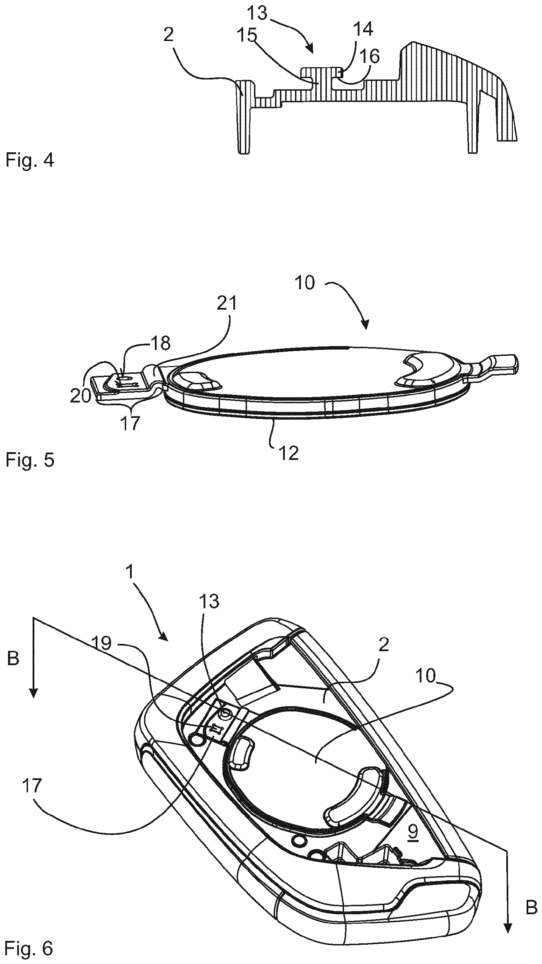

Fig. 4 ist ein Teil des Schnitts der Fig. 3b zu entnehmen, nämlich der in Fig. 3b im rechten oberen Bereich dargestellte Schnitt durch einen Teil des Gehäuses. Es ist erkennbar, dass das Rückhalteelement 13 einstückig mit dem Gehäuseelement 2 ausgebildet ist, das bevorzugt aus einem thermoplastischen Kunststoff besteht. Das Rückhalteelement 13 besteht aus einem Säulenabschnitt 15 und einem Pilzkopf 14, der sich in der gezeigten Ausgestaltung in jeder radialen Richtung über die Erstreckung des gegenüber dem Pilzkopf verjüngten Säulenabschnitts hinaus erstreckt. Dadurch wird ein Hinterschnitt 16 bereitgestellt, der nach Anordnung der Befestigungszunge 17 mit dem Befestigungsloch 18 um den Säulenabschnitt 15 herum für die axiale Positionierung der in Fig. 4 nicht dargestellten Befestigungszunge wirkt.

Fig. 5 ist in einer perspektivischen Darstellung die Dichthaube 10 zu entnehmen. Insbesondere ist die Befestigungszunge 17 und das Befestigungsloch 18 zu entnehmen. Weiterhin ist die zwischen Befestigungszunge 17 und Dichterhebung 12 angeordnete Krümmungsverformung der Befestigungszunge 17 zu entnehmen, die den Faltenbalg 21 bildet und insbesondere für einen wenigstens teilweisen Ausgleich von Abmessungsabweichungen vorgesehen ist. Weiterhin ist in der Befestigungszunge 17 eine Führungsöffnung 20 angeordnet. Die Führungsöffnung 20 dient zur Einführung in ein komplementär zur Führungsöffnung 20 ausgebildetes Führungsglied 19 zur Positionierung der Dichthaube 10 gegen ein Verdrehen um das in das Befestigungsloch 18 eingeführte Rückhalteelement 13.

Fig. 6 ist eine weitere Ausgestaltung eines Funkschlüssels 1 zu entnehmen. Im Unterschied zu der in den Figs. 1 bis 5 dargestellten Ausgestaltung weist die in Fig. 6 dargestellte Ausführungsform ein speziell geformtes Rückhalteelement 13 auf. Bei dem in Fig. 6 dargestellten Rückhalteelement 13 handelt es sich im Gegensatz zu dem Rückhalteelement 13 der Ausbildungsform der Figs. 1 bis 5 nicht um einen einstückig mit dem Gehäuseelement 2 urgeformten Pilzkopf; stattdessen handelt es sich bei dem Rückhalteelement 13 in der in Fig. 6 dargestellten Ausführungsform um einen heißverstemmten Dom. Der heißverstemmte Dom 13 stellt eine ähnliche Funktionalität bereit wie sie bereits bei dem Rückhalteelement 13 der Ausführungsform der Figs. 1 bis 5 erläutert wurde; der heißverstemmte Dom hat jedoch im Zuge der Herstellung den Vorteil, dass der Dom nach dem Einführen des Doms in das Befestigungsloch heißverstemmt wird und dadurch ein Dehnen der Befestigungszunge 17 bei deren Anordnung um den Dom nicht erforderlich ist. Die Ausführung des Rückhalteelements 13 als heißverstemmter Dom eignet sich daher besonders für derartige Ausführungsformen, in denen die Dichthaube 10 aus einem Material mit vergleichsweise geringer Dehnungsfähigkeit hergestellt ist.

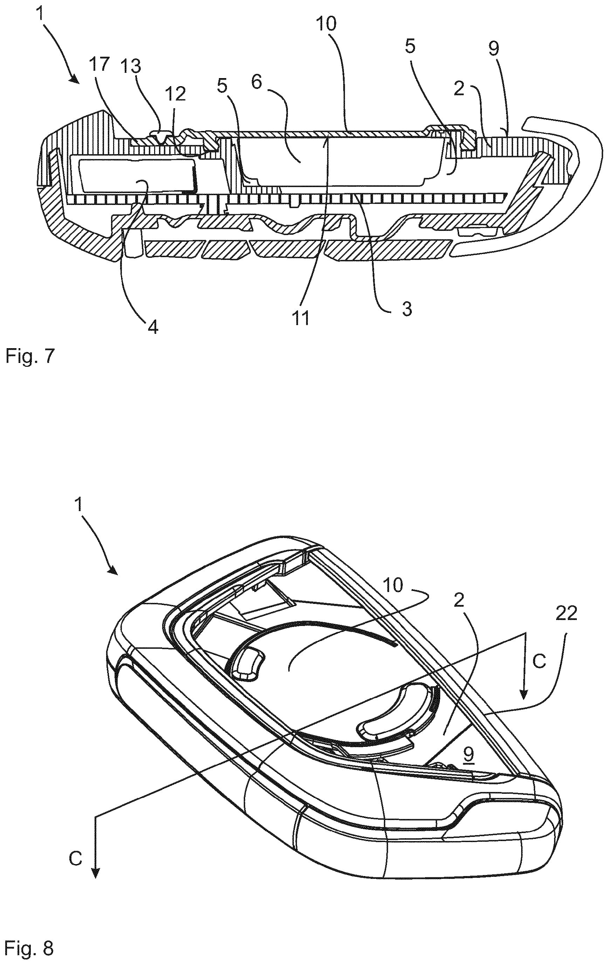

Fig. 7 ist eine Schnittdarstellung des Funkschlüssels der Fig. 6; dieser ist insbesondere zu entnehmen, wie der heißverstemmte Dom 13 für eine gut an der Befestigungszunge 17 anliegende Anordnung des Kopfes des Rückhalteelements 13 sorgt und damit für eine gute axiale Positionierung der Dichthaube 10 an dem Gehäuseelement 2.

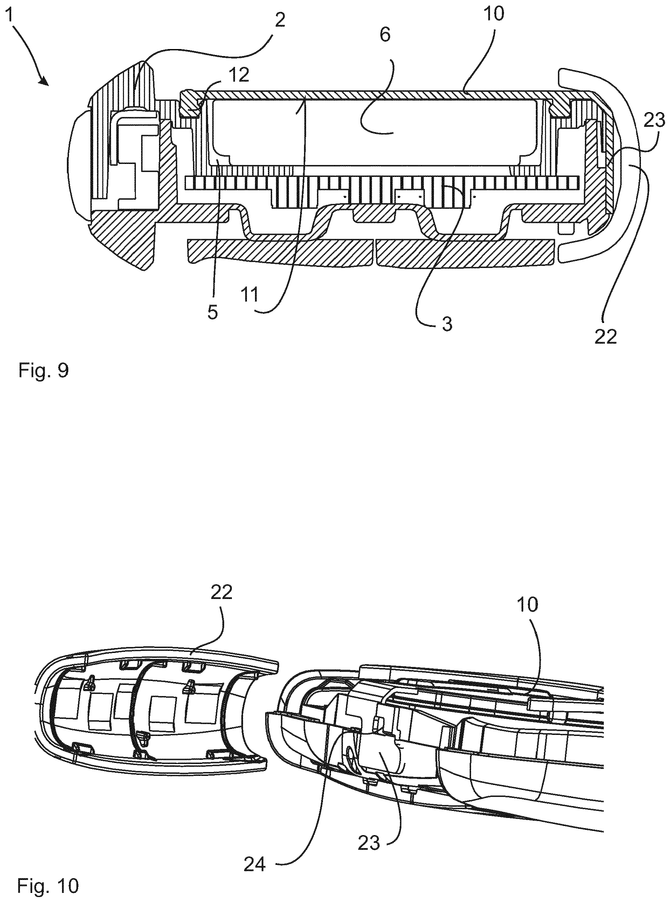

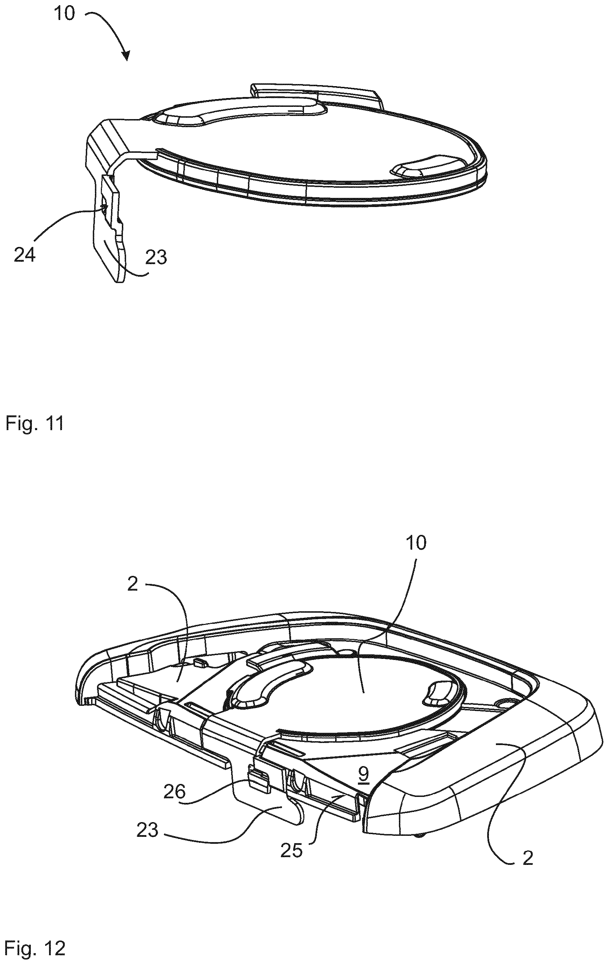

Die in Fig. 8 dargestellte Ausführungsform des Funkschlüssels 1 unterscheidet sich von der in Fig. 1 bis 5 und von der in Figs. 6 und 7 dargestellten Ausführungsform insbesondere dadurch, dass die Dichthaube 10 eine Klemmlasche aufweist, die mit einer Rückhalteöffnung an einer Seitenfläche des Gehäuseelements 2 einen Rückhaltevorsprung umgreift. Die Funktionsweise ist in der Schnittdarstellung der Fig. 9 dargestellt. Es ist erkennbar, wie die Klemmlasche 23 seitlich an dem Gehäuseelement 2 anliegend heruntergeführt wird und infolge des Anbringens des Seitenzierelements zwischen Seitenzierelement und Gehäuseelement 2 an dem Gehäuseelement 2 anliegend angeordnet ist. Wie Fig. 10 zu entnehmen ist, ist die Rückhalteöffnung 24 vorgesehen, die in der in Fig. 12 dargestellten Weise von einem Rückhaltevorsprung 26 des Gehäuseelements 2, der in die Rückhalteöffnung 24 eingreift, formschlüssig fixiert wird. Nach dem Aufsetzen des Seitenzierelements 22 ist die Klemmlasche 23 von außen, wie in der Darstellung der Fig. 8 ersichtlich, für den Bediener weitgehend verdeckt; die Ausführung der Klemmlasche und deren Anordnung zwischen Gehäuseelement und Seitenzierelement führt somit zu einer besonders ästhetischen Ausgestaltung des Funkschlüssels 1.

## Patentansprüche

1. Elektronisches Handgerät (1) mit einem wenigstens ein Gehäuseelement (2) aufweisenden Gehäuse, einer Elektronikanordnung (3, 4) und einem in dem Gehäuseelement (2) angeordneten Batterieraum (5) für die Aufnahme einer Flachbatterie (6) zur elektrischen Spannungsversorgung der Elektronikanordnung (3, 4),
wobei der Batterieraum (5) an einer Zugangsfläche (9) des Gehäuseelements (2) mit einer Einsatzöffnung (7) des Batterieraums (5) abschließt zum Entnehmen oder zum Einsetzen der Flachbatterie (6) im Rahmen eines Batteriewechsels,
wobei an der Zugangsfläche (9) des Gehäuseelements (2) eine umlaufende Dichtungsnut (8) ausgebildet ist, welche die Einsatzöffnung (7) einmal vollständig umläuft,
wobei die Einsatzöffnung (7) mit einer an dem Gehäuseelement (2) angeordneten Dichthaube (10) öffenbar und wiederverschließbar verschlossen ist zum Abdichten des Batterieraums (5) vor einem Eintritt von Flüssigkeit in den Batterieraum (5) hinein,
wobei die Dichthaube (10) an einer der Zugangsfläche (9) zugewandten Dichtungsfläche (11) eine elastisch verformbare Dichterhebung (12) aufweist,
wobei die Dichterhebung (12) komplementär zu der Dichtungsnut (8) ausgebildet ist und innerhalb der Dichtungsnut (8) eingebracht ist,
wobei die Dichterhebung (12) in einer Radialrichtung der Dichtungsnut (8) ein Übermaß gegenüber der Dichtungsnut (8) aufweist derart, dass die Dichterhebung (12) innerhalb der Dichtungsnut (8) durch die Dichtungsnut (8) in der Radialrichtung elastisch verformt ist zur Herbeiführung einer Dichtwirkung durch infolge der radial elastischen Verformung der Dichtungsnut (8) herbeigeführten Rückstellkräfte,
wobei das Gehäuse ein Seitenzierelement (22) aufweist, das mit dem Gehäuseelement (2) verbunden ist,
**dadurch gekennzeichnet, dass** die Dichthaube (10) eine Klemmlasche (23) mit einer Rückhalteöffnung (24) aufweist,
wobei die Klemmlasche (23) an einer Seitenfläche (25) des Gehäuseelements (2) anliegend und mit der Rückhalteöffnung (24) einen Rückhaltevorsprung (26) umgreifend zwischen dem Gehäuseelement (2) und dem Seitenzierelement (22) und an beiden anliegend angeordnet ist.

2. Handgerät (1) nach Anspruch 1, **dadurch gekennzeichnet, dass** das Gehäuseelement (2) ein Rückhalteelement (13) aufweist, das an der Zugangsfläche (9) und der Einsatzöffnung (7) benachbart angeordnet ist, wobei das Rückhalteelement (13) einen Pilzkopf (14) und einen gegenüber dem Pilzkopf (14) verjüngten Säulenabschnitt (15) aufweist zur Bereitstellung eines Hinterschnitts (16),
wobei die Dichthaube (10) eine elastische Befestigungszunge (17) mit einem Befestigungsloch (18) aufweist, wobei das Befestigungsloch (18) den Säulenabschnitt (15) derart umfasst, dass die Dichthaube (10) mittels des Hinterschnitts (16) in einer axialen Richtung positioniert ist.

3. Handgerät (1) nach Anspruch 2, **dadurch gekennzeichnet, dass** das Rückhalteelement (13) ein heißverstemmter Dom ist.

4. Handgerät (1) nach einem der Ansprüche 2 oder 3, **dadurch gekennzeichnet, dass** das Gehäuseelement (2) ein zylindrisches Führungsglied (19) aufweist, das an der Zugangsfläche (9) und sowohl der Einsatzöffnung (7) als auch dem Rückhalteelement (13) benachbart angeordnet ist,
wobei die Befestigungszunge (17) eine komplementär zum Führungsglied (19) ausgeformte Führungsöffnung (20) aufweist, die das Führungsglied (19) umfasst zur Positionierung der Dichthaube (10) gegen ein Verdrehen um das Rückhalteelement (13) in einer Dichthaubenebene.

5. Handgerät (1) nach einem der Ansprüche 2 bis 4, **dadurch gekennzeichnet, dass** die Dichthaube (10) einen zwischen der elastischen Befestigungszunge (17) und der Dichterhebung (12) ausgeformten Faltenbalg (21) aufweist zur Aufnahme von mechanischen Spannungen innerhalb der Dichthaube (10).

6. Handgerät (1) nach einem der vorhergehenden Ansprüche, **dadurch gekennzeichnet,**
**dass** eine radiale Erstreckung der Dichterhebung (12) entlang des gesamten Umfangs der Dichterhebung (12) ein Übermaß gegenüber einem Radialabstand der die Dichtungsnut (8) begrenzenden Begrenzungsflächen (8', 8") in einem zur Anordnung der Dichterhebung (12) vorgesehenen Axialabschnitt der Dichtungsnut (8) aufweist, wenn die Dichterhebung (12) nicht in der Dichtungsnut (8) angeordnet ist.

7. Handgerät (1) nach einem der vorhergehenden Ansprüche, **dadurch gekennzeichnet, dass** die Dichtungsnut (8) entlang ihrer gesamten axialen Erstreckung koaxiale Begrenzungsflächen (8', 8") aufweist.

8. Handgerät (1) nach einem der vorhergehenden Ansprüche, **dadurch gekennzeichnet, dass** die Dichtungsnut (8) und die Dichterhebung (12) jeweils einen Kreisverlauf vollziehen.

9. Handgerät (1) nach einem der vorhergehenden Ansprüche, **dadurch gekennzeichnet, dass** die Dichterhebung (12) ein Elastomer, bevorzugt ein elastomeres Silikon aufweist.

10. Handgerät (1) nach einem der vorhergehenden Ansprüche, **dadurch gekennzeichnet, dass** die Dichthaube (10) ein einstückiges elastisches Element ist.

11. Handgerät (1) nach einem der vorhergehenden Ansprüche, **dadurch gekennzeichnet, dass** das elektronische Handgerät (1) ein Funkschlüssel eines Fahrzeugs ist.

## Claims

1. Electronic handheld device (1) with a housing having at least one housing element (2), an electronic arrangement (3, 4) and a battery compartment (5) arranged in the housing element (2) for accommodating a flat battery (6) for supplying electrical voltage to the electronic arrangement (3, 4),
wherein the battery compartment (5) terminates at an access surface (9) of the housing element (2) with an insertion opening (7) of the battery compartment (5) for removing or inserting the flat battery (6) for a battery change,
wherein a circumferential sealing groove (8) is formed on the access surface (9) of the housing element (2), which groove completely surrounds the insert opening (7) once,
wherein the insertion opening (7) is openably and resealably closed by a sealing capot (10) arranged on the housing element (2) for sealing the battery compartment (5) against an entry of liquid into the battery compartment (5),
wherein the sealing capot (10) has an elastically deformable sealing projection (12) on a sealing surface (11) facing the access surface (9),
wherein the seal projection (12) is formed complementary to the seal groove (8) and is introduced within the seal groove (8),
wherein the seal projection (12) has an oversize in a radial direction of the seal groove (8) relative to the seal groove (8) such that the seal projection (12) is elastically deformed within the seal groove (8) by the seal groove (8) in the radial direction to bring about a sealing effect by restoring forces brought about as a result of the seal projection's radial elastic deformation in the seal groove (8),
wherein the housing comprises a side decorative element (22) connected to the housing element (2),
**characterised in that** the sealing capot (10) has a clamping tab (23) with a retaining opening (24),
wherein the clamping tab (23) is arranged in abutment against a side surface (25) of the housing element (2) and with the retaining opening (24) engaging around a retaining projection (26) between the housing element (2) and the side decorative element (22) and in abutment against both.

2. Handheld device (1) according to claim 1, **characterised in that** the housing member (2) comprises a retaining member (13) disposed adjacent the access surface (9) and the insertion opening (7), the retaining member (13) comprising a mushroom head (14) and a poillar portion (15) tapered relative to the mushroom head (14) to provide an undercut (16),
wherein the sealing capot (10) has an elastic fastening tongue (17) with a fastening hole (18), the fastening hole (18) comprising the pillar portion (15) such that the sealing capot (10) is positioned in an axial direction by means of the undercut (16).

3. Handheld device (1) according to claim 2, **characterised in that** the retaining member (13) is a heat-caulked dome.

4. Handheld device (1) according to any one of claims 2 or 3, **characterized in that** the housing element (2) comprises a cylindrical guide member (19) arranged on the access surface (9) and adjacent to both the insertion opening (7) and the retaining element (13),
wherein the fastening tongue (17) has a guide aperture (20) shaped complementary to the guide member (19) and encompassing the guide member (19) for positioning the sealing capot (10) against rotation about the retaining element (13) in a sealing capot plane.

5. Handheld device (1) according to any one of claims 2 to 4, **characterized in that** the sealing capot (10) has a bellows (21) formed between the elastic fastening tongue (17) and the seal projection (12) for absorbing mechanical stresses within the sealing capot (10).

6. Handheld device (1) according to any one of the preceding claims, **characterized in that**
a radial extension of the seal projection (12) along the entire circumference of the seal projection (12) is oversized relative to a radial distance of the boundary surfaces (8', 8'') bounding the seal groove (8) in an axial portion of the seal groove (8) provided for the arrangement of the seal projection (12) when the seal projection (12) is not arranged in the seal groove (8).

7. Handheld device (1) according to any one of the preceding claims, **characterised in that** the sealing groove (8) has coaxial boundary surfaces (8', 8'') along its entire axial extension.

8. Handheld device (1) according to any one of the preceding claims, **characterised in that** the seal groove (8) and the seal projection (12) each follow a circular path.

9. Handheld device (1) according to any one of the preceding claims, **characterised in that** the seal projection (12) comprises an elastomer, preferably an elastomeric silicone.

10. Handheld device (1) according to any one of the preceding claims, **characterised in that** the sealing capot (10) is a one-piece elastic element.

11. Handheld device (1) according to any one of the preceding claims, **characterised in that** the electronic handheld device (1) is a radio key of a vehicle.

## Revendications

1. Outil à main portatif (1) avec un boîtier présentant au moins un élément de boîtier (2), un dispositif électronique (3, 4) et un compartiment de batterie (5) disposé dans l'élément de boîtier (2) pour recevoir une batterie plate (6) pour l'alimentation en tension électrique du dispositif électronique (3, 4),
dans lequel le compartiment de batterie (5) se termine sur une surface d'accès (9) de l'élément de boîtier (2) par une ouverture d'insertion (7) du compartiment de batterie (5) pour le retrait ou l'insertion de la batterie plate (6) dans le cadre d'un changement de batterie,
une rainure d'étanchéité périphérique (8) étant formée sur la surface d'accès (9) de l'élément de boîtier (2), laquelle fait une fois le tour complet de l'ouverture d'insertion (7),
dans lequel l'ouverture d'insertion (7) est fermée de manière ouvrable et refermable par un capot d'étanchéité (10) disposé sur l'élément de boîtier (2) pour rendre étanche le compartiment de batterie (5) contre une entrée de liquide dans le compartiment de batterie (5),
le capot d'étanchéité (10) présentant, sur une surface d'étanchéité (11) tournée vers la surface d'accès (9), une surélévation d'étanchéité (12) élastiquement déformable,
dans lequel le rehaussement de joint (12) est réalisé de manière complémentaire à la rainure d'étanchéité (8) et est inséré à l'intérieur de la rainure d'étanchéité (8),
la surélévation d'étanchéité (12) présente dans une direction radiale de la rainure d'étanchéité (8) une surdimension par rapport à la rainure d'étanchéité (8) de telle sorte que la surélévation d'étanchéité (12) est déformée élastiquement dans la direction radiale à l'intérieur de la rainure d'étanchéité (8) par la rainure d'étanchéité (8) pour produire un effet d'étanchéité par des forces de rappel provoquées par la déformation élastique radiale de la rainure d'étanchéité (8),
dans lequel le boîtier comprend un élément de marquage latéral (22) qui est relié à l'élément de boîtier (2),
**caractérisé en ce que** le capot d'étanchéité (10) comprend une patte de serrage (23) avec une ouverture de retenue (24),
la patte de serrage (23) étant disposée entre l'élément de boîtier (2) et l'élément de séparation latérale (22) en s'appliquant contre une surface latérale (25) de l'élément de boîtier (2) et en entourant par l'ouverture de retenue (24) une saillie de retenue (26) et en s'appliquant contre les deux.

2. Outil à main (1) selon la revendication 1, **caractérisé en ce que** l'élément de boîtier (2) comprend un élément de retenue (13) disposé de manière adjacente à la surface d'accès (9) et à l'ouverture d'insertion (7), l'élément de retenue (13) comprenant une tête en champignon (14) et une partie de colonne (15) effilée par rapport à la tête en champignon (14) pour fournir une contre-dépouille (16),
dans lequel le capot d'étanchéité (10) comprend une languette de fixation élastique (17) avec un trou de fixation (18), le trou de fixation (18) comprenant la partie de colonne (15) de telle sorte que le capot d'étanchéité (10) est positionné dans une direction axiale au moyen de la contre-dépouille (16).

3. Outil à main (1) selon la revendication 2, **caractérisé en ce que** l'élément de retenue (13) est un dôme maté à chaud.

4. Outil à main (1) selon l'une des revendications 2 ou 3, **caractérisé en ce que** l'élément de boîtier (2) comprend un élément de guidage cylindrique (19) disposé sur la surface d'accès (9) et adjacent à la fois à l'ouverture d'insertion (7) et à l'élément de retenue (13),
la languette de fixation (17) présentant une ouverture de guidage (20) de forme complémentaire à l'élément de guidage (19), qui entoure l'élément de guidage (19) pour le positionnement du capot d'étanchéité (10) contre une rotation autour de l'élément de retenue (13) dans un plan du capot d'étanchéité.

5. Outil à main (1) selon l'une quelconque des revendications 2 à 4, **caractérisé en ce que** le capot d'étanchéité (10) présente un soufflet (21) formé entre la languette de fixation élastique (17) et le relief d'étanchéité (12) pour absorber les tensions mécaniques à l'intérieur du capot d'étanchéité (10).

6. Outil à main (1) selon l'une quelconque des revendications précédentes, **caractérisé en ce que**
qu'une extension radiale du rehaussement de joint (12) le long de toute la périphérie du rehaussement de joint (12) présente une surmesure par rapport à une distance radiale des surfaces de délimitation (8', 8'') délimitant la rainure d'étanchéité (8) dans une section axiale de la rainure d'étanchéité (8) prévue pour l'agencement du rehaussement de joint (12) lorsque

7. Outil à main (1) selon l'une quelconque des revendications précédentes, **caractérisé en ce que** la rainure d'étanchéité (8) présente des surfaces de délimitation coaxiales (8', 8'') sur toute son étendue axiale.

8. Outil à main (1) selon l'une quelconque des revendications précédentes, **caractérisé en ce que** la rainure d'étanchéité (8) et le relief d'étanchéité (12) suivent chacun un parcours circulaire.

9. Outil à main (1) selon l'une quelconque des revendications précédentes, **caractérisé en ce que** la surélévation d'étanchéité (12) comprend un élastomère, de préférence un silicone élastomère.

10. Outil à main (1) selon l'une quelconque des revendications précédentes, **caractérisé en ce que** le capot d'étanchéité (10) est un élément élastique monobloc.

11. Outil à main (1) selon l'une quelconque des revendications précédentes, **caractérisé en ce que** le combiné électronique (1) est une radiocommande d'un véhicule.
